# EUROPÄISCHE PATENTANMELDUNG

(11) **EP 3 623 763 A1**
(43) Veröffentlichungstag der Anmeldung: **18.03.2020**
(21) Anmeldenummer: 18405021.9
(22) Anmeldetag: 23.10.2018
(51) Int. Cl.: G01C 21/34, G06Q 10/08

(54) **SENDUNGSVERTEILUNGSSYSTEM UND VERFAHREN ZUM VERTEILEN VON WARENSENDUNGEN**

(30) Priorität: 12.09.2018 CH 10792018
(71) Anmelder: Graphmasters SA, 3095 Spiegel b. Bern (CH)
(72) Erfinder: Heise, Sebastian, D-32369 Rahden (DE)

(57) **Zusammenfassung**

Die Erfindung betrifft ein Sendungsverteilungssystem und ein entsprechendes Verfahren mit der Aufgabe ein vorteilhaftes Verteilen von Warensendungen bereitzustellen. Zu diesem Zweck ist ein System und ein entsprechendes Verfahren offenbart zum Anliefern von Warensendungen mittels wenigstens eines Fahrzeugs, umfassend ein Tourenplanungssystem, welches ein Navigationssystem umfasst, wobei das Tourenplanungssystem dazu ausgebildet ist, das Volumen eines Laderaums des wenigstens einen Fahrzeugs elektronisch zu speichern, den Laderaum in mehrere Ladezonen aufzuteilen, Adressierungsdaten der Warensendungen zu speichern, und eine Fahrtroute des wenigstens einen Fahrzeugs in Abhängigkeit von den Positionen der Warensendungen im Laderaum und der Adressierungsdaten zu ermitteln und an das Navigationssystem zu übermitteln.

## Beschreibung

Die Erfindung betrifft ein System und ein Verfahren zum Verteilen von Warensendungen mittels einer Flotte von Fahrzeugen.

Das Verteilen von Warensendungen, zu dem hierbei das planmässige Verladen von Transportfahrzeugen, das planmässige Anfahren von Zielpunkten und das planmässige Entladen gehören, unterliegt erheblichem logistischen Aufwand. Verbesserungen der obigen Parameter können wesentliche Zeitvorteile für die Verteilung einbringen. Zum Beispiel können bei der Zuteilung von Aufträgen bezüglich Warensendungen auf verschiedene Touren oder Fahrzeuge geringe Veränderungen an der Auftragslage große Veränderungen am Zuteilungsschema erfordern. Daher besteht der Bedarf, die Tourenaufteilung bezüglich der vorhandenen Fahrzeuge und Warensendungen erst kurzfristig vor dem Start durchzuführen.

Es ist daher eine Aufgabe der Erfindung ein vorteilhaftes Sendungsverteilungssystem und ein Verfahren zum Verteilen von Warensendungen bereitzustellen.

Vorgesehen ist ein Sendungsverteilungssystem zum Anliefern von Warensendungen mittels wenigstens eines Fahrzeugs, umfassend ein Tourenplanungssystem, welches ein Navigationssystem umfasst, wobei das Tourenplanungssystem dazu ausgebildet ist, das Volumen eines Laderaums des wenigstens einen Fahrzeugs elektronisch zu speichern, den Laderaum in mehrere Ladezonen aufzuteilen, Adressierungsdaten der Warensendungen zu speichern, und eine Fahrtroute des wenigstens einen Fahrzeugs in Abhängigkeit von den Positionen der Warensendungen im Laderaum und der Adressierungsdaten zu ermitteln und an das Navigationssystem zu übermitteln. Weiter ein Verfahren zum Verteilen von Warensendungen mittels wenigstens eines Fahrzeugs, umfassend die Verfahrensschritte: elektronisches Speichern des Volumens eines Laderaums des wenigstens einen Fahrzeugs, Aufteilen des Laderaums in mehrere Ladezonen, Ermitteln einer Fahrtroute des wenigstens einen Fahrzeugs in Abhängigkeit von den Positionen der Warensendungen, und Übermitteln der Fahrtroute an ein Navigationssystem.

Ausführungsformen der Erfindung sind in den abhängigen Ansprüchen beschrieben.

Nachfolgend wird die Erfindung beispielhaft beschrieben.

Das Sendungsverteilungssystem zum Anliefern von Warensendungen mittels wenigstens eines Fahrzeugs umfasst ein Tourenplanungssystem, das ein Computersystem mit entsprechender Software umfasst. Im Tourenplanungssystem wird das Volumen der Laderäume der Fahrzeuge gespeichert, welche die Warensendungen an die Zielorte befördern. Im Tourenplanungssystem werden die Laderäume jeweils in verschiedene Ladezonen aufgeteilt, beispielsweise in zwölf Ladezonen je Laderaum. Es werden gleichmäßige Ladezonen im Fahrzeug konfiguriert. Eine im Computersystem des Tourenplanungssystem implementierte Streufunktion ermittelt einen Streuwert für eine Warensendung, wobei zusammengehörige Warensendungen den gleichen Streuwert erhalten. Die Streuwerte werden auf die Ladepositionen gleichverteilt. Die Adressierungsdaten bzw. Zielorte der Vielzahl der zu versendenden Warensendungen sind im Tourenplanungssystem elektronisch gespeichert.

In einem Beispiel der Erfindung werden die Positionen der Warensendungen in den Ladezonen der Laderäume von einem Belader bestimmt. In diesem Beispiel erfasst der Belader die Daten bezüglich der Positionen der Warensendungen mittels an den Positionen angebrachten Barcodes oder Lichtemitter. Diese Daten werden dann an das Tourenplanungssystem übermittelt und dort gespeichert.

In einem Beispiel umfasst das Sendungsverteilungssystem ein elektronisches Anzeigegerät mit Eingabevorrichtung, wobei der Benutzer mittels der Eingabevorrichtung die Positionen der Warensendungen im Laderaum am Anzeigegerät vorgibt. Der Benutzer kann hierbei am Bildschirm die Warensendungen den Ladezonen der Fahrzeuge zuordnen. Hiermit wird flexibel jedem Stückgut oder Warensendung in eindeutiger Weise eine Position in einem Fahrzeug zugeordnet. Alternativ ist das Tourenplanungssystem dazu ausgebildet, die Positionen der Warensendungen in den Ladezonen elektronisch mittels eines Algorithmus vorzugeben. Die Volumina der Warensendungen werden hierzu dem Tourenplanungssystem übermittelt, welches den Warensendungen entsprechend der Volumen und Fahrtrouten Ladezonen in den Fahrzeugen zuweist. Die im Tourenplanungssystem berechneten Positionen der Warensendungen werden dem Belader oder den Beladern der Fahrzeuge übertragen, beispielsweise zu elektronischen Tablets oder Smartphones. Der Belader kann dann die Warensendungen in den vorgegebenen Ladezonen der Fahrzeuge einladen.

Bei einer alternativen Lösung umfasst das Sendungsverteilungssystem ein Robotersystem, in welches die auf unterschiedliche Weise vorgebbaren Daten der Positionen der Warensendungen eingespeist werden und welches dazu ausgebildet ist, mittels Greifern die Warensendungen an die Positionen im Laderaum zu positionieren. Auf diese Weise wird der Verfahrensschritt des Einladens automatisiert in Kombination mit den anderen Merkmalen des Sendungsverteilungssystems und Sendungsverteilungsverfahrens.

Vorgesehen ist, eine Fahrtroute des wenigstens einen Fahrzeugs in Abhängigkeit von den Positionen der Warensendungen im Laderaum und der Adressierungsdaten zu ermitteln und an ein Navigationssystem im Fahrzeug zu übermitteln. Entsprechend werden Fahrtrouten einer Vielzahl von beladenen Fahrzeugen oder Fahrzeugflotten jeweils an die Navigationssysteme übermittelt. Das Navigationssystem des jeweiligen Fahrzeugs ermittelt eine ideale und effiziente Fahrreihenfolge bezüglich der anzufahrenden Zielorte. Die vorgeschlagene Fahrreihenfolge oder Sequenz kann vom Navigationssystem aufgrund sich verändernder äußerer Einflüsse, Verkehrslage, Auftragslage, etc., geändert werden. Das Navigationssystem ermittelt den nächsten Halt oder Zielort für eine Warensendung und meldet die Ladeposition des dort zu entladenden Warenguts oder der Warengüter an den Fahrer.

Die Fahrtrouten der einzelnen Fahrzeuge werden optimiert auf der Basis der Ladepositionen. Zum Beispiel wird ein Zielort für eine grossvolumige Warensendung in einer schwer zugänglichen Ladeposition später angefahren, wenn die Warensendung für den Entlader frei zugänglich ist und dieser daher keinen zusätzlichen Arbeitsaufwand mit dem Umschichten der Warensendungen im Laderaum hat. Idealerweise berechnet das Tourenplanungssystem für die Fahrzeuge Rundfahrten, d.h. Touren mit identischem Ausgangsort und Endort.

Vorteilhafterweise verfügt der Fahrer bzw. Belader und Entlader des jeweiligen Fahrzeugs über die Positionen der Warensendungen in den Ladezonen. Diese Positionen werden ihm elektronisch angezeigt, so dass ein Suchen der Warensendungen am Zielort vor dem Entladen entfällt, der Entlader kann direkt auf die zu entladenden Warensendungen zugreifen. Im Beispiel der Aufteilung des Laderaums in zwölf Ladezonen, welche Regalen im Laderaum zugeordnet sind, etwa in zwei Ebenen, verteilen die Streuwerte die Warensendungen oder Pakete auf diese zwölf Ladezonen gleichmäßig. Daher muss der Fahrer oder Entlader nicht zwischen allen 120 Warensendungen suchen, sondern die Suche wird begrenzt auf 10 Warensendungen.

Alternativ zum manuellen Entladen ist dem Fahrzeug ein Robotersystem mit Greifarmen zugeordnet, welches auf die Positionsdaten des Tourenplanungssystems bzw. des umfassten Navigationssystems zugreifen kann und ein automatisches Entladen des Fahrzeugs ermöglicht. Das Robotersystem kann beispielsweise am Innendach des Laderaums installiert sein. Das Robotersystem kann alternativ als automatisches Schubladensystem oder Klappensystem im Laderaum ausgebildet sein, welches das manuelle Entladen unterstützt und derart ein kombiniertes manuelles und automatisiertes Entladen ermöglicht.

Auf die beschriebene Weise wird dem Fahrer sowohl eine optimierte Fahrtroute zur Sendungsverteilung ermöglicht als auch dem Belader und Entlader bzw. dem automatischen Beladungssystem und Entladungssystem ermöglicht, in zeitsparender und effektiver Weise die Warensendungen dem Empfänger zuzustellen.

## Patentansprüche

1. Sendungsverteilungssystem zum Anliefern von Warensendungen mittels wenigstens eines Fahrzeugs, umfassend ein Tourenplanungssystem, welches ein Navigationssystem umfasst, wobei das Tourenplanungssystem dazu ausgebildet ist, das Volumen eines Laderaums des wenigstens einen Fahrzeugs elektronisch zu speichern, den Laderaum in mehrere Ladezonen aufzuteilen, Adressierungsdaten der Warensendungen zu speichern, und eine Fahrtroute des wenigstens einen Fahrzeugs in Abhängigkeit von den Positionen der Warensendungen im Laderaum und der Adressierungsdaten zu ermitteln und an das Navigationssystem zu übermitteln.

2. Sendungsverteilungssystem nach Anspruch 1, **dadurch gekennzeichnet, dass** das Tourenplanungssystem einen Algorithmus umfasst, welcher eine optimierte Fahrtroute berechnet auf der Grundlage der Positionen der Warensendungen in Laderaum und der Adressierungsdaten bzw. Zielorte.

3. Sendungsverteilungssystem nach Anspruch 1 oder 2, **dadurch gekennzeichnet, dass** das Navigationssystem die Fahrtroute verändert in Abhängigkeit von der Verkehrslage auf der ermittelten Fahrtroute.

4. Sendungsverteilungssystem nach Anspruch 1, 2 oder 3, **dadurch gekennzeichnet, dass** das Tourenplanungssystem dazu ausgebildet ist, die Positionen der Warensendungen in den Ladezonen elektronisch vorzugeben.

5. Sendungsverteilungssystem nach einem der vorigen Ansprüche, **dadurch gekennzeichnet, dass** das Tourenplanungssystem dazu ausgebildet ist, die Positionen der Warensendungen in den Ladezonen von einer Vielzahl von Fahrzeugen zu speichern und die Fahrtrouten der Vielzahl von Fahrzeugen zu ermitteln.

6. Sendungsverteilungssystem nach Anspruch 1, **dadurch gekennzeichnet, dass** die Positionen der Warensendungen in den Ladezonen vom Benutzer vorgegeben werden und die Daten bezüglich der Positionen der Warensendungen mittels an den Positionen angebrachten Barcodes oder Lichtemitter ermittelt und an das Tourenplanungssystem übermittelt werden.

7. Sendungsverteilungssystem nach Anspruch 6, **dadurch gekennzeichnet, dass** das Sendungsverteilungssystem wenigstens ein elektronisches Anzeigegerät mit Eingabevorrichtung umfasst, wobei der Benutzer mittels der Eingabevorrichtung die Positionen der Warensendungen im Laderaum am Anzeigegerät vorgibt.

8. Sendungsverteilungssystem nach einem der vorigen Ansprüche, **dadurch gekennzeichnet, dass** das Sendungsverteilungssystem ein Robotersystem umfasst, in welches die vorgegebenen Daten der Positionen der Warensendungen eingespeist werden und welches dazu ausgebildet ist, mittels Greifern die Warensendungen an die Positionen im Laderaum zu positionieren und/ oder am jeweiligen Zielort die Warensendungen gezielt von den Positionen im Laderaum zu entladen.

9. Navigationssystem zum Verwenden in einem Sendungsverteilungssystem nach einem der vorigen Ansprüche.

10. Verfahren zum Verteilen von Warensendungen mittels wenigstens eines Fahrzeugs, umfassend die Verfahrensschritte:
- elektronisches Speichern des Volumens eines Laderaums des wenigstens einen Fahrzeugs,
- Aufteilen des Laderaums in mehrere Ladezonen,
- Ermitteln einer Fahrtroute des wenigstens einen Fahrzeugs in Abhängigkeit von den Positionen der Warensendungen, und
- Übermitteln der Fahrtroute an ein Navigationssystem.
